# EUROPÄISCHE PATENTANMELDUNG

(11) **EP 3 190 159 A1**
(43) Veröffentlichungstag der Anmeldung: **12.07.2017**
(21) Anmeldenummer: 16000024.6
(22) Anmeldetag: 08.01.2016
(51) Int. Cl.: C09C 1/36, C09C 3/06

(54) **VERFAHREN ZUR OBERFLÄCHENBESCHICHTUNG EINES SUBSTRATS**

(71) Anmelder: Kronos International, Inc., 51373 Leverkusen (DE)
(72) Erfinder: Beyer, Norbert, 50226 Frechen (DE)

(57) **Zusammenfassung**

Die Erfindung richtet sich auf ein Verfahren zur Oberflächenbeschichtung eines Substrats, z.B. anorganische Partikel, mit einem Metalloxid, wobei eine verringerte massenbezogene spezifische Oberfläche der Metalloxid-Beschichtung erzielt wird durch Erhöhung des Molverhältnisses der in der Lösung vorhandenen mehrwertigen Anionen zu den zu fällenden Metallionen in der Lösung.

Die Erfindung betrifft insbesondere die Oberflächenbeschichtung von Titandioxidpigmentpartikeln mit Aluminiumoxid.

## Beschreibung

### Gebiet der Erfindung

Die Erfindung richtet sich auf ein Verfahren zur Oberflächenbeschichtung eines Substrats, z.B. anorganische Partikel, mit einem Metalloxid, wobei eine verringerte massenbezogene spezifische Oberfläche der Metalloxid-Beschichtung erzielt wird. Die Erfindung betrifft insbesondere die Oberflächenbeschichtung von Titandioxidpigmentpartikeln mit Aluminiumoxid.

### Technologischer Hintergrund der Erfindung

Anorganische Partikel, insbesondere anorganische Pigmentpartikel werden vielfach oberflächenbeschichtet, um bestimmte Eigenschaften zu verändern wie beispielsweise Abriebfestigkeit, Oberflächenladung, Dispergiereigenschaften, Säure- oder Lichtbeständigkeit. Beispielsweise beschreibt die US 2,885,366 das Aufbringen eines dichten Siliciumdioxid-Überzugs auf Substratteilchen wie Nickel- oder Eisenpulver, Glasfasern oder Titandioxid. Farb- und Weißpigmente werden regelmäßig mit verschiedenen Oxiden und Hydroxiden beschichtet (z.B. EP 0 130 272 A1, US Re.27818).

Insbesondere Titandioxidpigmente werden im Verlaufe ihres Herstellverfahrens auch mit schwerlöslichen Aluminiumverbindungen beschichtet, hauptsächlich mit wasserfreien und/oder wasserhaltigen Aluminiumoxidverbindungen. Auf diese Weise wird die Kompatibilität der Pigmente mit den übrigen Bestandteilen in den Anwendersystemen z.B. in Beschichtungen erhöht, d.h. typische Eigenschaften des Weißpigments wie Dispergierbarkeit, Aufhellvermögen oder Opazität werden verbessert.

Dem Fachmann sind verschiedene Verfahrensweisen zur Fällung von Aluminiumoxid/- hydroxid aus der Patentliteratur bekannt.
Beispielsweise offenbart US 6,616,746 B2 ein Verfahren zur Fällung von Aluminiumoxid bei gleitendem pH-Wert, bei dem von einer wässrigen Titandioxidsuspension mit alkalischem pH-Wert ausgegangen, sodann Natriumaluminat vorgelegt und anschließend Schwefelsäure zugegeben wird, bis ein pH-Wert von 5 erreicht ist.
US Re 27,818 offenbart eine ähnliche Verfahrensweise, bei der Aluminiumsulfat vorgelegt wird. Anschließend wird mit Lauge oder einer anderen alkalisch reagierenden Substanz ein neutraler pH-Wert eingestellt und parallel Aluminiumoxid gefällt.

Üblicherweise wird Aluminiumoxid jedoch bei konstantem pH-Wert gefällt ("fix-pH"-Verfahren). Hierbei werden eine wasserlösliche alkalische Aluminiumverbindung und eine saure Verbindung (z.B. Säure oder wasserlösliche saure Aluminiumverbindung) bei gleichbleibendem pH-Wert in die Suspension gegeben und Aluminiumoxid gefällt. Alternativ können auch eine wasserlösliche saure Aluminiumverbindung und eine alkalische Verbindung (z.B. Lauge oder wasserlösliche alkalische Aluminiumverbindung) eingesetzt werden, um das Aluminiumoxid zu fällen. Diese Verfahrensvarianten sind beispielsweise in EP 1 603 978 B1 und EP 1 989 264 B1 offenbart.

Die bekannten Verfahren zur Oberflächenbeschichtung von Titandioxidpigmenten mit Aluminiumoxid/-hydroxid führen allerdings zu weiteren Veränderungen der Partikeloberfläche, beispielsweise zu einer Erhöhung der massenbezogenen spezifischen Oberfläche (gemessen z.B. nach BET) oder eine Verschiebung des isoelektrischen Punkts. Die zusätzliche Oberfläche führt im Bereich der Beschichtungen in der Folge zu einem erhöhten Bedarf an Additiven (z.B. Dispergiermittel) und an Bindemittel. Beides ist in der Regel unerwünscht, da dadurch dem Anwender höhere Kosten für die Rezeptur entstehen oder seine Freiheitsgrade zur Optimierung der Rezeptur eingeschränkt werden.

Es besteht also der Bedarf nach einem Verfahren, mit Hilfe dessen eine gewünschte Menge Aluminiumoxid appliziert werden kann und dennoch Eigenschaften wie spezifische Oberfläche und die Lage des isoelektrischen Punkts unabhängiger steuerbar sind und z.B. der Bedarf an Dispergiermittel und Bindemittel in Beschichtungssystemen geringer ausfällt als bei Verfahren gemäß dem Stand der Technik.

### Aufgabenstellung und Kurzbeschreibung der Erfindung

Der Erfindung liegt die Aufgabe zugrunde, ein Verfahren zur Oberflächenbeschichtung eines Substrats, insbesondere von anorganischen Partikeln mit einem Metalloxid anzugeben, mit Hilfe dessen eine geringere massenbezogene spezifische Oberfläche des beschichteten Substrats erzeugt wird als mit Verfahren gemäß dem Stand der Technik.

Die Aufgabe wird gelöst durch ein Verfahren zur Verringerung der massenbezogenen spezifischen Oberfläche einer Metalloxid-enthaltenden Beschichtung auf einem Substrat, wobei die Metalloxide aus einer wässrigen Lösung, die Metallionen und mehrwertige Anionen enthält, gefällt werden, durch Erhöhung des Molverhältnisses der Anionen zu den Metallionen in der Lösung.

Weitere vorteilhafte Ausformungen der Erfindung sind in den Unteransprüchen angegeben.

### Beschreibung der Erfindung

Alle im Folgenden offenbarten Angaben bezüglich Größe in µm usw., Konzentration in Gew.-% oder Vol.-%, pH-Wert usw. sind so zu verstehen, dass alle Werte, die im Bereich der dem Fachmann bekannten jeweiligen Messgenauigkeit liegen, mit umfasst sind.
Desweiteren werden im Rahmen der Erfindung unter "Metalloxid" auch alle entsprechenden Hydroxid- oder wasserhaltigen Metalloxid-Phasen verstanden.

Die Fällung von Metalloxiden, z.B. von Aluminiumoxid aus verschiedenen wasserlöslichen Vorläuferverbindungen läuft im allgemeinen spontan und vollständig ab. Insbesondere bei der Herstellung von Titandioxidpigmenten werden die initial gefällten wasserreichen Metalloxidverbindungen im Lauf der weiteren Verarbeitung (Trocknung der Suspensionsfilterpaste, Mahlung etc.) entwässert und nähern sich stöchiometrisch dem wasserfreien Metalloxid, z.B. Al₂O₃ an.

Untersuchungen im Rahmen der vorliegenden Erfindung haben gezeigt, dass einige Oberflächeneigenschaften des gefällten Metalloxids wie z.B. die spezifische Oberfläche oder der isoelektrische Punkt (IEP) durch Anwesenheit von mehrwertigen Anionen in der Suspension während der Fällung beeinflusst werden. Geeignete Anionen sind beispielsweise Sulfat, Phosphat, Citrat, Ascorbat, Isoascorbat, Oxalat. Diese erfindungsgemäß eingesetzten mehrwertigen Anionen werden im Folgenden auch als "Fällungsadditiv" bezeichnet. Insbesondere können erfindungsgemäß die Eigenschaften des gefällten Metalloxids über die Mengenverhältnisse von den in der Suspension vorhandenen Anionen zu den zu fällenden Metallionen gesteuert werden.

Es wird angenommen - ohne sich auf die Richtigkeit dieser Theorie festlegen zu wollen - dass die Anionen konzentrationsabhängig als chelatisierende Liganden wirken und dass daraufhin die Metalloxidfällung über eine Stabilisierung mehrkerniger Cluster als Zwischenprodukte der Kondensation abläuft. Somit könnte die finale Kondensation zum gewünschten Metalloxid im Mittel häufiger an der Substratoberfläche (z.B. Partikeloberfläche) stattfinden anstatt in der flüssigen Phase, in der sich das Substrat befindet (z.B. als dispergierte Partikel) mit erst anschließender Migration zur Substrat- bzw. Partikeloberfläche. Auf diese Weise wird bei gleicher Zusammensetzung eine verbesserte Oberfläche der Metalloxidschicht mit einer geringeren massenbezogenen Oberfläche auf dem Substrat erzielt. Gleichzeitig verschiebt sich der pH-Wert des isoelektrischen Punkts (IEP) der Metalloxid-beschichteten Substratoberfläche in Richtung auf den IEP des reinen Metalloxids.

Das erfindungsgemäße Verfahren ist anwendbar bei der Fällung beliebiger Metalloxide aus wässriger Lösung auf eine Substratoberfläche. Insbesondere geeignet sind die Oxide von Aluminium, Zirkon, Silicium. Als mehrwertige Anionen sind beispielsweise Sulfat, Phosphat, Citrat, Ascorbat, Isoascorbat und Oxalat geeignet.

In einer besonderen Ausführung geht die Erfindung von einer wässrigen Suspension anorganischer Partikel mit einem bevorzugten Partikeldurchmesser von <1 mm aus. Bei den Partikeln handelt es sich insbesondere um anorganische Pigmente, bevorzugt Titandioxidpigment. Die Suspension weist bevorzugt einen Feststoffgehalt von etwa 200 bis 800 g/L, insbesondere 300 bis 500 g/L auf. Optional können übliche Dispergiermittel enthalten sein.
Werden Titandioxidpigmentpartikel verwendet, können diese sowohl dem Sulfatverfahren wie dem Chloridverfahren entstammen. Vor der erfindungsgemäßen
Oberflächenbeschichtung können bereits eine oder mehrere Schichten anderer anorganischer Oxide wie z.B. SiO₂, ZrO₂, TiO₂, SnO₂, Al₂O₃, P₂O₅ etc. gegebenenfalls in Mischung und/oder Copräcipitation auf die Partikeloberfläche aufgebracht worden sein.

Der Suspension werden die gewählten Metallionen und die gewählten Anionen zugegeben. Die gewählten Metallionen werden bevorzugt in Form der wässrigen Lösung einer Vorläuferverbindung des zu fällenden Metalloxids zugegeben. Die Anionen werden entweder in Form der wässrigen Lösung eines entsprechenden Salzes und /oder als entsprechende Säure zugegeben. Zudem können sie bereits in der Vorläuferverbindung des Metalloxids enthalten sein. Dem Fachmann sind geeignete Verbindungen bekannt. Insbesondere im Falle der Oberflächenbeschichtung von Titandioxid können die üblicherweise verwendeten Verbindungen im Rahmen des erfindungsgemäßen Verfahrens zum Einsatz kommen. Beispielsweise können bei der Fällung von Aluminiumoxid in Gegenwart von Sulfationen Aluminiumsulfatlösung oder Natriumaluminatlösung als Aluminiumoxid-Vorläuferverbindung eingesetzt werden. Geeignete Verbindungen, mit denen die gemäß der Erfindung erforderliche Anionenkonzentration in der Suspension erreicht werden kann, sind beispielsweise lösliche Sulfate wie Aluminiumsulfat, Natriumsulfat und Schwefelsäure.
Die eigentliche Durchführung der Fällung inklusive pH-Wert-Steuerung erfolgt nach üblichen Verfahrensweisen und ist dem Fachmann bekannt.

Im Rahmen der Erfindung sind als mehrwertige Anionen beispielsweise Sulfat, Phosphat, Citrat, Ascorbat, Isoascorbat und Oxalat geeignet. Bei den zu fällenden Metalloxiden handelt es sich bevorzugt um die Oxide von Aluminium, Zirkon und Silicium.

In einer besonderen Ausführung der Erfindung wird Aluminiumoxid in Gegenwart von Sulfationen auf die Oberfläche von Titandioxidpartikeln gefällt.
Grundsätzlich ist es aus dem Stand der Technik bekannt, bei der Oberflächenbehandlung von Titandioxidpigmentpartikeln Aluminiumoxid in Gegenwart von Sulfationen zu fällen. Allerdings beträgt das Molverhältnis der während der Reaktion vorhandenen Sulfationen in den bekannten Verfahren höchstens 3 bezogen auf Al₂O₃, wenn Aluminiumsulfat als Vorläuferverbindung und beispielsweise NaOH zur pH-Wert-Steuerung eingesetzt wird. Es war bisher nicht bekannt, dass über das Molverhältnis von Sulfationen zu Aluminiumionen in der Suspension während der Fällung die spezifische Oberfläche (BET) des gefällten Aluminiumoxids und damit die spezifische Oberfläche der oberflächenbehandelteten Titandioxidpartikel gesteuert werden kann.

Die Erfindung lehrt außerdem, dass der isoelektrische Punkt (IEP) der Partikel bei ansonsten nahezu unveränderter Zusammensetzung gezielt verschoben werden kann. Beispielsweise wird für Aluminiumoxid-beschichtete Titandioxidpigmente durch Erhöhung des SO₄/Al₂O₃-Molverhältnis der IEP zu höheren Werten verschoben mit dem Vorteil, dass in üblichen Anstrichstoffen die darin dispergierten Pigmentpartikel eine verbesserte elektrostatische Stabilisierung erfahren.

### Beispiele

Die Erfindung wird anhand der folgenden Beispiele genauer beschrieben, ohne dass dadurch der Umfang der Erfindung eingeschränkt werden soll.

### Beispiel A1

Eine wässrige Suspension von Titandioxidpartikeln hergestellt nach dem Sulfatverfahren mit einer Konzentration von 0,45 kg TiO₂/L wurde sandgemahlen, anschließend auf eine

Konzentration von 0,35 kg TiO₂/L verdünnt, auf 60° C temperiert und ein pH-Wert von etwa 10 mit NaOH eingestellt. Nachfolgend wurde innerhalb von 30 Minuten wässrige Aluminiumsulfatlösung (Konzentration 107 g/L gerechnet als Al₂O₃) in einer Menge von 2,7 Gew.-% gerechnet als Al₂O₃ und bezogen auf TiO₂ zugegeben. Nachfolgend wurde innerhalb von 45 Minuten 30%ige NaOH in einer solchen Menge unter Rühren zugegeben, dass sich ein pH-Wert von etwa 4 einstellte. Nach weiteren 120 Minuten Rührens wurde mit NaOH ein pH-Wert von 7,6 eingestellt.
Anschließend wurden die Partikel aus der Suspension abgetrennt, gewaschen, bei 160°C getrocknet, über eine Dampfmahlung mikronisiert und die spezifische Oberfläche (BET) sowie der isoelektrische Punkt (IEP) in Abhängigkeit vom pH-Wert bestimmt. Die Messwerte sind in Tabelle 1 aufgeführt.

### Beispiel A2

Wie Beispiel A1 mit dem Unterschied, dass zusätzlich nach dem Temperieren auf 60°C und Einstellen des pH-Werts auf 10 0,5 Mol Na₂SO₄ je kg TiO₂ im Ansatz zugegeben wurde

**Tabelle 1**

| **Beispiel** | **SO₄/Al₂O₃** | **BET** | **IEP** |
|---|---|---|---|
| | **(Molanteile)** | **(m²/g)** | **(pH)** |
| A1 | 3 | 9,3 | 8,5 |
| A2 | 5 | 9,0 | 8,5 |

### Beispiel B1

Es wurde von einer auf gleiche Art hergestellten, sandgemahlenen und auf einen pH-Wert von 10 eingestellten Titandioxid-Suspension wie in Beispiel A1 ausgegangen.
Nachfolgend wurden wässrige Lösungen von Aluminiumsulfat (Konzentration 107 g/L gerechnet als Al₂O₃) und Natronlauge parallel unter Rühren innerhalb von 90 Minuten in solchen Mengen zugegeben, dass sich ein konstanter pH-Wert von etwa 4 einstellte (fix-pH-Behandlung). Nach einer weiteren Rührzeit von 120 Minuten wurde wie zuvor der pH-Wert auf 7,6 eingestellt.
Anschließend wurden die Partikel aus der Suspension abgetrennt, gewaschen, bei 160°C getrocknet, über eine Dampfmahlung mikronisiert und die spezifische Oberfläche (BET) sowie der isoelektrische Punkt (IEP) in Abhängigkeit vom pH-Wert bestimmt. Die Messwerte sind in Tabelle 2 aufgeführt.
Beispiel B2

Wie Beispiel B1 mit dem Unterschied, dass zusätzlich nach dem Temperieren auf 60°C und Einstellen des pH-Werts auf 10 0,5 Mol Na₂SO₄ je kg TiO₂ zugegeben wurde.

**Tabelle 2**

| **Beispiel** | **SO₄/Al₂O₃** | **BET** | **IEP** |
|---|---|---|---|
| | **(Molanteile)** | **(m²/g)** | **(pH)** |
| B1 | 3 | 9,2 | 8,4 |
| B2 | 5 | 8,7 | 8,5 |

### Beispiel C1

Es wurde von einer auf gleiche Art hergestellten, sandgemahlenen und auf einen pH-Wert von 10 eingestellten Titandioxid-Suspension wie in Beispiel A1 ausgegangen.
Nachfolgend wurden wässrige Lösungen von Aluminiumsulfat (Konzentration 107 g/L gerechnet als Al₂O₃) und Natriumaluminat (Konzentration 304 g/L gerechnet als Al₂O₃) parallel unter Rühren innerhalb von 90 Minuten in solchen Mengen zugegeben, dass sich ein konstanter pH-Wert von etwa 4 einstellte (fix-pH-Behandlung). Nach einer weiteren Rührzeit von 120 Minuten wurde wie zuvor der pH-Wert auf 7,6 eingestellt.
Anschließend wurden die Partikel aus der Suspension abgetrennt, gewaschen, bei 160°C getrocknet, über eine Dampfmahlung mikronisiert und die spezifische Oberfläche (BET) sowie der isoelektrische Punkt (IEP) in Abhängigkeit vom pH-Wert bestimmt. Die Messwerte sind in Tabelle 3 aufgeführt.

### Beispiel C2

Wie Beispiel C1 mit dem Unterschied, dass zusätzlich nach dem Temperieren auf 60°C und Einstellen des pH-Werts auf 10 0,5 Mol Na₂SO₄ je kg TiO₂ zugegeben wurde.

**Tabelle 3**

| **Beispiel** | **SO₄/Al₂O₃** | **BET** | **IEP** |
|---|---|---|---|
| | **(Molanteile)** | **(m²/g)** | **(pH)** |
| C1 | 0,8 | 10,1 | 8,6 |
| C2 | 2,6 | 9,3 | 8,7 |

### Beispiele D1 bis D4 und Vergleichsbeispiel D0

In dieser Versuchsserie wurde von einem kommerziellen Titandioxidpigment (Kronos 2064) ausgegangen und die Durchführung der Oberflächenbehandlung erfindungsgemäß variiert. Kronos 2064 ist ein mit Aluminiumoxid oberflächenbehandeltes Titandioxidpigment aus dem Sulfatverfahren.

Vergleichsbeispiel D0 beinhaltet ein gemäß Kronos 2064 oberflächenbehandeltes Titandioxidpigment.
Beispiel D1 beinhaltet ein gemäß Kronos 2064 oberflächenbehandeltes Titandioxidpigment (Vergleichsbeispiel D0) mit dem Unterschied, dass gemeinsam mit den Aluminiumoxid-Vorläuferverbindungen 0,2 Mol Na₂SO₄ je kg TiO₂ zugegeben wurde.
Beispiel D2 entspricht D1 mit dem Unterschied, dass gemeinsam mit den Aluminiumoxid-Vorläuferverbindungen 0,5 Mol Na₂SO₄ je kg TiO₂ zugegeben wurde.
Beispiel D3 entspricht D1 mit dem Unterschied, dass gemeinsam mit den Aluminiumoxid-Vorläuferverbindungen 0,8 Mol Na₂SO₄ je kg TiO₂ zugegeben wurde.
Beispiel D4 entspricht D1 mit dem Unterschied, dass gemeinsam mit den Aluminiumoxid-Vorläuferverbindungen 1,1 Mol Na₂SO₄ je kg TiO₂ zugegeben wurde.
Für die Pigmente gemäß Vergleichsbeispiel D0 und für die Beispiele D1, D2, D3 und D4 wurde die spezifische Oberfläche (BET) sowie der isoelektrische Punkt (IEP) in Abhängigkeit vom pH-Wert bestimmt. Die Messwerte sind in Tabelle 4 aufgeführt.

**Tabelle 4**

| **Beispiel** | **SO₄/Al₂O₃** | **BET** | **IEP** |
|---|---|---|---|
| | **(Molanteile)** | **(m²/g)** | **(pH)** |
| D0 | 1,1 | 13,7 | 7,9 |
| D1 | 1,9 | 13,9 | 8,0 |
| D2 | 2,9 | 13,6 | 8,2 |
| D3 | 4,2 | 13,4 | 8,3 |
| D4 | 5,3 | 13,9 | 8,3 |

### Fazit

Die Beispiele zeigen, dass die Erhöhung des Molverhältnisses der Anionen (Sulfationen) zu den zu fällenden Metallionen (Aluminium) in der Lösung zu einer Verringerung der massenbezogenen spezifischen Oberfläche (BET) der beschichteten Partikel führt und damit zu einer dichteren Beschichtung. Dies ist auch ableitbar aus den ermittelten Werten für den isoelektrischen Punkt (IEP). Mit ansteigendem SO₄/Al₂O₃-Molverhältnis und sinkenden BET-Werten steigt der pH-Wert des isoelektrischen Punkts und nähert sich damit dem pH-Wert des isoelektrischen Punkts für eine reine Al₂O₃-Oberfläche (pH-Wert von etwa 9) an. Kleinere Werte als 9 lassen den Schluss zu, dass sich an der Oberfläche der Partikel auch noch Gebiete mit nicht bedecktem TiO₂ befinden (IEP bei einem pH-Wert von etwa 6).

## Patentansprüche

1. Verfahren zur Verringerung der massenbezogenen spezifischen Oberfläche einer Metalloxid-enthaltenden Beschichtung auf einem Substrat, wobei die Metalloxide aus einer wässrigen Lösung, die Metallionen und mehrwertige Anionen enthält, gefällt werden, durch Erhöhung des Molverhältnisses der Anionen zu den Metallionen in der Lösung.

2. Verfahren nach Anspruch 1 **dadurch gekennzeichnet, dass**
das Substrat anorganische Partikel sind.

3. Verfahren nach Anspruch 2 **dadurch gekennzeichnet, dass**
die Partikel Titandioxidpartikel sind.

4. Verfahren nach einem oder mehreren der Ansprüche 1 bis 3 **dadurch gekennzeichnet, dass**
das gefällte Metalloxid ausgewählt ist aus der Gruppe Aluminiumoxid, Zirkonoxid, Siliciumoxid.

5. Verfahren nach einem oder mehreren der Ansprüche 1 bis 4 **dadurch gekennzeichnet, dass**
die mehrwertigen Anionen ausgewählt sind aus der Gruppe Sulfat, Phosphat, Citrat, Ascorbat, Isoascorbat und Oxalat.

6. Verfahren nach einem oder mehreren der Ansprüche 1 bis 5 **dadurch gekennzeichnet, dass**
das Metalloxid Aluminiumoxid und die Anionen Sulfationen sind.

7. Verfahren nach Anspruch 6 **dadurch gekennzeichnet, dass**
das molare Verhältnis von Sulfat zu Aluminiumoxid zwischen 0,8 und 5,0 liegt.
